# EUROPEAN PATENT SPECIFICATION

(11) **EP 3 030 077 B1**
(45) Date of publication and mention of the grant of the patent: **11.09.2019**
(21) Application number: 14750023.5
(22) Date of filing: 12.06.2014
(51) Int. Cl.: A01N 37/46, A01N 55/10, A01P 17/00

(54) **FORMULATIONS AND NANOPARTICLES OF SILICA WITH INSECT REPELLENT ACTIVITY ON TEXTILE SUBSTRATE AND OTHER MATERIALS AND RESPECTIVE PROCESS OF PREPARATION AND FIXATION**
FORMULIERUNGEN UND SILICANANOPARTIKEL MIT INSEKTENABWEHRWIRKUNG AUF EINEM TEXTILSUBSTRAT UND ANDEREN MATERIALIEN SOWIE ENTSPRECHENDES VERFAHREN ZUR HERSTELLUNG UND FIXIERUNG
FORMULATIONS ET NANOPARTICULES DE SILICE RÉACTIVES AYANT UNE ACTIVITÉ RÉPULSIVE CONTRE LES INSECTES SUR UN SUBSTRAT TEXTILE ET D'AUTRES MATÉRIAUX, ET PROCÉDÉ DE PRÉPARATION ET DE FIXATION S'Y RAPPORTANT

(30) Priority: 12.06.2013 PT 10700113
(43) Date of publication of application: 15.06.2016
(73) Proprietor: Success Gadget Nanotecnologia E Novos Materiais, Lda., 4750-823 Barcelos (PT)
(72) Inventor: NAYLOR DA ROCHA GOMES, Jaime Isidoro, 4730-575 Soutelo, WD (PT)
(74) Representative: Pereira da Cruz, Joao
(86) International application number: PCT/PT2014/000041
(87) International publication number: WO 2014/200378

(56) References cited:
- WO-A1-2005/120440
- US-A1- 2003 165 452
- US-A1- 2007 292 464

## Description

### FIELD OF THE INVENTION

The present invention consists of formulations and nanoparticles of silica with repellent of mosquitos and other insects, with hydrolysable silane on different surfaces, namely textile substrates. More specifically in a formulation on insect repellent that have amino or hydroxylic in their composition, such as ethyl 3(N-n-butyl-N-acetylamine) propionate with a similar formula to the amino acid alanine, a well known anti-insect, together with an hydrolysable silane that can be applied on substrates such as textiles, paper, leather, paints, varnishes, polymer and other surfaces. The formulation is preferentially incorporated on silica nanoparticles that are next fixed on textile surfaces or others, and preferably nanoparticles with groups that fixes to cellulosic fibres.

### Background of the invention

It is well known that insect bites and other parasites can cause itching and rashes. However, some insects such as mosquitos, can transmit viral infections, for example Malaria or Dengue that can cause death to the infected human being. Since it has been verified that insects are present in every season (from winter to summer) it has been realized for several years the necessity to present repellent solutions.

Insect repellents consist of preparations used to repel these insects so as to avoid stings that cause the infection of the skin, forcing them to move away from the human being. The preparations are in the form of lotions, sticks, gel, roll-on, emulsions, sprays, amongst others.

One example of a repellent is DEET (N,N-Diethyl-meta-toluamide) that is used against mosquitos, flies, mite and fleas. However this product is questionable since in the long term it is not known what effect it will have on health.

Another repellent is the ethyl 3(N-n-butyl-N-acetylamine) propionate) with the commercial name IR3535 (Merck) that, sprayed, is very efficient against mosquitos, ticks and tse-tse flies, amongst others, and Picaridin (Icaridin) with the commercial name Bayrepel (Bayer), also a very efficient mosquito repellent, that are products considered safe for application on the skin. IR3535 for example. It is considered a bio-insecticide by the WHO, World Health Organization since it is an isomer of alanine, an amino-acid.

However, it is verified that even though there are solutions that can be applied on the skin by spray or lotion, the efficiency of these products has been decreasing throughout the years since they have created resistance to the active substances. Besides this disadvantage, the product has to be applied at high concentration, several times a day. For this reason, solutions have emerged that have as objective to increase the efficiency of the performance of the repellents, such as their incorporation in textile fibres. This solution has spurned the developing of some techniques of incorporation and use of some solutions that are going to be presented next.

There are products of high interest for the human health such as insect repellents and insecticides. So as to bind some insect repellents, namely antimosquitos, to textile fibres, such as permethrin and DEET, microencapsulation can be used since in the solid form (microcapsules) it is possible to bind with binding agents. The products themselves, permethrin and DEET, are liquid products that because they are liquids they dn-thave consistency and it is not possible to fix them onto the fibres, and are applied to fibres in another form, such as mixed with polymeric and dried on top of the fibres, do not resist to more than one or two domestic washes. They might be useful for technical textiles but not for garments (that imply a high number of washes).

The patent application US2010/0183690 refers the microencapsulation of permethrin and demonstrates the application on garment, promoting its durability. Microcapsules with permethrin or DEET, contain normally an essential oil that is a mosquito repellent, such as citronella and eucalyptus. Just as the essential oils permethrin and DEET are products that are totally immiscible in water, but miscible with oils and organic solvents.

Another way of obtaining textiles with additional properties is the immobilization through incorporation with polymeric binders that are applied on the surface of fibres, as described on the document of the US6015570 patent. This document refers one application of insect repellent based on DEET, using binders of silicone.

As an alternative to the products identified, that eliminate or repels insects, we present a new composition based on the product with the commercial designation of IR3535 from Merck (ethyl 3(N-n-butyl-N-acetylamine) propionate associated to an hydrolysable silane and incorporated on the textile fibres in a way that its efficiency is high after multiple washes. Even though it is used on creams and sprays on the direct application, IR3535 cannot be used in microcapsules since it is a product partially miscible with water. Therefore, a new composition is presented that binds ethyl 3(N-n-butyl-N-acetylamine) propionate to surfaces such as, for example, textile materials that even after multiple washes, a high repellent efficiency is obtained.

It was also detected in this invention that ethyl 3(N-n-butyl-N-acetylamine) propionate is also an activator of the optical brightener Blankphor R, it means that besides being used in this function of the intensification of the effect of the optical brightener, its presence can be detected through this effect. This is an advantage relatively to other repellent products that can only be detected by their effect on mosquitos, that are normally exhaustive tests and take a long time.

On the other hand, patent US2007/0079447 describes a preparation of ethyl 3(N-n-butyl-N-acetylamine) propionate impregnated on textile fibres. A simple impregnation of this product implies that the product be removed straight after the first washing, since it is not bound by any fixing agent.

For a minimum activity, it would be necessary to incorporate a great quantity of the product so that some of that product would remain after some washes. The waste is huge and the efficiency very small.

Another way is the immobilization through the reacting with the fibres or by the incorporation in polymeric binders that make up the fibres, both processes conveying a bigger washfastness than the microencapsulation that is applied on the surface of fibres as is described in in patent US6015570 and US2007/0079447 in which an application of a repellent based on DEET and using binders is described.

There are also antimicrobial products that it is claimed that bind by reaction with the fibre, through a silane group, such as is the case of the product from Aegis (Microban), an antimicrobial cationic agent, even though doubts subsist as for its form of binding, since silane is a group that hydrolyses easily in the presence of water, in the storing or even in the application, not being able after hydrolysis to react with the hydroxy groups of cellulose, as it is claimed. The most probable is a post polymerization with the formation of a film, which is also claimed by the supplier avoid this type of problem, we propose in our patent, the immobilization of the cationic silane antimicrobial first on the silica nanoparticles that have reactive groups capable of reacting with the fibre and thus they can bind the antimicrobial on fibres without the risk of polymerizing by hydrolysis, since they are already bound to the nanoparticles.

In the case of ethyl 3(N-n-butyl-N-acetylamine) propionate (IR3535), the silane used to fix the nanoparticles to a substrate is GLYMO, a silane that is stopped from polymerizing because it is bound to the silica nanoparticles, and a silane that does not need a hydrolysable fixing agent, since it contains an epoxy group that fixes to the fibres.

Another form of modifying the textile surfaces of textile surfaces is through a hydrolysable silane such a trimethoxysilane. Sol-gel is a matrix of a metal oxide such as titanium dioxide that forms spontaneously in aqueous medium in the presence of a surfactant, by hydrolysis of a substituent group, such as TEOS, tetraethylorthosilicate, and further polymerization by acid catalysis to form a matrix of silicon oxide.

We may add that the process of preparation of sol-gel is normally done in aqueous medium, so if the is precursor is hydrophilic, such as silicate, the incorporation of a product is by direct dissolution in water, if it is hydrophobic or immiscible in water, such as TEOS, it should be previously mixed with ethanol to be miscible in water. Taking as an example the silicon oxide sol-gel, the first phase of the formation is the hydrolysis, normally an acid hydrolysis, the silicon precursor for the formation of silicon oxide.

With the continued addition of an acid, or an acid salt, such as ammonium chloride, polymerization occurs by condensation of silicon hydroxide, to form a silica matrix of silicon oxide. The polymeric matrix can involve other hydrophilic products in its interior through the formation of hydrogen bonds.

In this way we can use sol-gel with functional products, as long as they are hydrophilic, such as flame retardants, antimicrobial and others.

From sol-gel, nanoparticles of silica can be precipitated, that have the advantage over other metallic oxides for being porous, and being able to incorporate a functional product that was introduced in the sol-gel.

There are many applications of sol-gel on various surfaces, such as metallic, glass and more recently, textile materials. However, the functionalization of the textile surfaces for the incorporation of functional products in the sol-gel is still scarce and the incorporation of hydrophobic products and of low solubility in water is a matter that is still under study.

Recently, processes for the development of binding hydrolysable silane films formed on fibres after application through their incorporation in sol-gel of an antimicrobial product (CHT). However it is difficult to control the hydrolysis for the formation of the silane film. It can be formed during the storage of the product such as is mentioned in patent US2009074971.

We may add that the most relevant documents were considered, such as Sol-Gel technology for ecological dyeing of cellulosic fibres and the patent US20070292464. Even though in Sol-Gel Technology for ecological dyeing of cellulosic fibres nanoparticles of silica were mentioned, they do not contain ethyl 3(N-n-butyl-N-acetylamine) propionate and in US20070292464 the microcapsules that contain the insect repellent, ethyl 3(N-n-butyl-N-acetylamine) propionate is encapsulated whereas in the present invention, the fixation to the textile fibres of the formulation resulting from the ethyl 3(N-n-butyl-N-acetylamine) propionate and the hydrolysable silane consisting of GLYMO that is incorporated in the nanoparticles, is done by means of a fixation between the epoxy group of the formulation that contains the active product and the cellulosic fibres, which itself has a surprising technical effect when compared to the known state of the art since it is guaranteed a high washfastness, an effect that is obtained through the technical differentiating characteristic of the present invention.

Patent application n. US 2003165452 provide a controlled release of compositions and methods of making thereof. The compositions have an effective amount of at least one hydrophobic active ingredient and a silicone fluid entrapped in a hybrid silicone powder matrix. The present compositions preferably are dry powders.

Patent application n. WO 2005120440 disclose a particle comprising an inorganic network and organic compounds which are covalently bonded to the network by means of a spacer group, the organic compounds being inside the particle and optionally on the surface of the particle. The invention also relates to methods for producing said particle, and to the uses thereof in formulations and preparations, especially in preparations having light protection properties.

### Summary of the Invention

So as to avoid this type of problem, it is proposed in this patent the immobilization on silica nanoparticles of a formulation comprising an insect repellent consisting of ethyl 3(N-n-butyl-N-acetylamine) propionate (IR3535), and GLYMO.

The process includes the formation from the sol-gel of nanoparticles and their precipitation for the formation of a dispersion of nanoparticles that contain the active product. The nanoparticles are then fixed to the textile material through a group present in the nanoparticles. To obtain this result it is necessary to previously functionalize the nanoparticles that contain the active product with an appropriate group for fixation to the cellulosic fibres, such as the epoxy group, so as to fix them afterwards on the textile material.

There are products with epoxy groups, immobilized directly in textile fibres, such as products of cationization of cotton, GLYTAC and CTHAC. Their fixation is through the epoxy group to the fibres in alkaline medium. There aren't any solutions for fixation in which the formulation is fixed to the textile fibres through silica nanoparticles. The solution we propose in particular in this patent, is the immobilization of the active product on the silica nanoparticle through a compound that contains an epoxy group.

The active product, being a part of a formulation with an epoxysilane, the epoxysilane consisting of 3-glycidylpropylmethoxysilane GLYMO, can fix to cellulosic fibres, through the fixation of such fibres with an epoxy group, guaranteeing in this way a high washfastness because of the fixation between the formulation containing the active product and the cellulosic fibres.

### Detailed description of the Invention

The ethyl 3(N-n-butyl-N-acetylamine) propionate (IR3535), is a product known for the efficiency in insect repellency, more specifically mosquitos. In chemical terms, the ethyl 3(N-n-butyl-N-acetylamine) propionate is characterized by being majorly hydrophobic. This property makes its incorporation in microcapsules, difficult, since this is a product that is partially miscible with water, microencapsulation wouldn't be viable in an oil in water emulsion (o/w), it would mean that one part would remain in water and therefore out of the microcapsule. In the case of microcapsules there is also the issue of the limitation in the number of washes they resist, since they burst during the washes, due to friction and lose their functional content during the process of washing.

The present invention consists in a formulation of insect repellents or antimicrobial that are immiscible in water or almost totally immiscible in water, with hydrolysable silanes and nanoparticles of silica, and that contain amino groups and/or hydroxyl groups capable of forming hydrogen bonds with a silica matrix of a sol-gel, and that after being applied in this form, or in the form of nanoparticles of silica to a textile substrate, a strong bonding on the textile fibres is obtained on the textile fibres and a corresponding high efficiency even after multiple washes, via the fixation groups also incorporated during the sol-gel process.

Taking that into consideration, and so as to prepare a formulation that allows the fixation of ethyl 3(N-n-butyl-N-acetylamine) propionate to a substrate such as for example a textile, it is necessary to add an epoxysilane consisting of 3-glycidylpropylmethoxysilane (GLYMO). 3-glycidylpropylmethoxysilane is made up of a glycidyl group that transforms into epoxy in alkaline or neutral conditions, and a silane group. When adding 3-glycidylpropylmethoxysilane GLYMO to the ethyl 3(N-n-butyl-N-acetylamine) propionate a formulation is obtained.

The epoxy group of 3-glycidylpropylmethoxysilane will be available to fix to the substrate that is going to be used. In case the substrate is textile, and the application is a direct application, the epoxy fixes with the hydroxyl groups of cellulosic fibres or other fibres and materials containing hydroxyl groups or other nucleophilic groups such as amine NR2, where R is a hydrogen or radical such as methyl, ethyl, propyl, butyl, etc.

### Gel formation

Generally, if the product that is going to be incorporated is hydrophilic, the silica precursor is also hydrophilic and the incorporation of the product is by direct dissolution in water. This is the case for sodium silicate. In the present invention, the sol-gel is modified. Since the active product is mostly immiscible in water, ethyl 3(N-n-butyl-N-acetylamine) propionate is combined with GLYMO, a sol-gel of an oil in water emulsion (o/w) is prepared by adding a silica precursor in aqueous phase, sodium silicate or TEOS, the latter one previously mixed with ethanol. One advantage is it being an aqueous medium process, it avoids solvent and turning it into a more ecological process.

Another advantage as referred previously is the fact of it being possible to use a hydrolysable silane such as 3-glycidylpropylmethoxysilane to fix the ethyl 3(N-n-butyl-N-acetylamine) propionate to the silica nanoparticles which stops the silane of polymerizing when fixation of the product through a silane group to the cellulosic fibres, since the molecule is already fixed to the nanoparticles. In this way it is possible to fix products to fibres and other materials, storing the product in an aqueous medium, without the risk of polymerizing during the storage.

### Fixation via silica nanoparticles

From the sol-gel, the silica nanoparticles are precipitated adding more acid at the end of the process of formation of the sol-gel, with mixing, forming in this way a formulation comprising ethyl 3(N-n-butyl-N-acetylamine) propionate contained in the silica nanoparticles. A dispersion of the nanoparticles is applied to the material, fixation the nanoparticles containing the formulation during the process of thermofixation with the aid of the GLYMO comprised by the formulation, by a process known to the industry of textile finishing as Pad-fix, which consists of a passage of the textile material through a tank containing the products followed by a continuous thermofixation process in an equipment designated by stenter.

In the case of cellulosic or proteic fibres, and the hydrolysable silane having an epoxy group, such as GLYMO-glycidylpropyltrimethoxysilane for example, the nanoparticles can be fixed to the fibres through the epoxy group already bound to the nanoparticles, without the necessity of the addition of a binder or another group for such purpose. The process of fixation between the epoxy of the nanoparticles and the cellulosic fibres, or proteic fibres, is promoted by temperature and alkaline pH.

In the present invention for the product that includes ethyl 3(N-n-butyl-N-acetylamine) propionate to have a durability superior to the number of washes of textile articles, it needs to be fixed to the cellulosic fibres through the glycidyl CH₂CH₂OH groups, that after forming the epoxy ring in alkaline conditions it fixes to the cellulose, the functional products or 3(N-n-butyl-N-acetylamine) propionate therefore staying fixed to the fibre, the glycidyl group in its epoxy form of GLYMO acting as a linker between the formulation of insect repellency to the cellulosic fibres.

In the present invention we claim a formulation that comprises ethyl 3(N-n-butyl-N-acetylamine) propionate (3) with an hydrolysable silane, the silane consisting of GLYMO, a formulation being formed in this way that is part of the sol-gel, formed during the process described above, which fixes to cellulosic fibres through the epoxy group in GLYMO, after a process of thermofixation onto the textile material. As the silane compound - GLYMO - contains epoxy, it will fix the nanoparticles to the fibres.

### Application of the product without nanoparticles

As an alternative, a formulation can be fixed directly to the fibres through GLYMO, in which the fixation of ethyl 3(N-n-butyl-N-acetylamine) propionate occurs in loco when of the application on the material. The formulation comprising ethyl 3(N-n-butyl-N-acetylamine) propionate and GLYMO can also be prepared previously and apply it later to the textile material. The formulation fixes through the epoxy group in the absence of water to avoid hydrolysis.

### Application to other materials

In the case of paper it can be by spray or in the process of production of the paper itself, incorporating the nanoparticles with the ethyl 3(N-n-butyl-N-acetylamine) propionate in the paper pulp. In the case of packages made of paper it can be by printing or coating, in the case of construction surfaces such as walls and floor, or other materials that are coated by paints or varnishes, it can be by coating just as pains and varnishes are applied, it being possible for the formulation that comprises ethyl 3(N-n-butyl-N-acetylamine) propionate and GLYMO, incorporated or not in the nanoparticles, to be mixed in the paint itself or the varnish.

For the fixation to these materials, the material should be heated at temperatures that promote the polymerization of GLYMO such as is already done for the application of sol-gel containing hydrolysable silanes. In other materials such as polymers, it can be by coating or spray, or incorporated during the production of the polymer. In this case, because the aqueous medium cannot be used, the silica nanoparticles containing the ethyl 3(N-n-butyl-N-acetylamine) propionate themselves are incorporated.

### Object of the invention

A preferential object of this invention is a formulation comprising ethyl 3(N-n-butyl-N-acetylamine) propionate and GLYMO without resorting to nanoparticles and in the absence of water.

It is a preferential object of this invention the preparation of the nanoparticles that consists of the following steps:
a) The addition of ethyl 3(N-n-butyl-N-acetylamine) propionate to GLYMO thereby obtaining a mixture, The mixture that is stirred and left for 2 hours at a temperature between 10 and 60°C, thereby a formulation being obtained,
b) The addition of the formulation resulting from step a) to a solution of sodium silicate and of a tensoactive
c) Stirring for 60 minutes and after this period acetic acid is added until a neutral pH is obtained for the formation of the sol-gel,
d) The addition of ammonium chloride until the pH lowers until 4 forming the nanoparticles and causing their precipitation,
e) Drying after which the nanoparticles of silica are obtained.

It is a preferential object of this invention a fixation process of the nanoparticles of silica antimosquito on materials such as fibres, paints, varnishes, metals, paper, leather, wood.

Preferentially the fixation of the nanoparticles to textile fibres is obtained through the epoxy group.

In a preferential way of fixation of the nanoparticles to textile fibres, they are applied:
a) In an aqueous dispersion by a process of Pad-Fix at an alkaline pH and at a temperature of fixation of 130°C; or
b) In by exhaustion in a rotating piece dyeing machine on garments at an alkaline pH and a temperature of 40°C followed by a thermofixation in a tumbler dryer; or
c) manually by impregnating the fibres in an aqueous dispersion of nanoparticles in which the pH is adjusted to 9 leaving it soaking for a period of 30 minutes, followed by drying in air or in the sun at a temperature above 30°C

Preferentially the fixation of the nanoparticles to paper is carried out by:
a) Spray; or
b) When producing the paper incorporating the nanoparticles with the ethyl 3(N-n-butyl-N-acetylamine) propionate in the paper pulp; or
c) Printing.

In a general way the process of fixation the silica nanoparticles on surfaces such as floor, walls, paints, varnishes, being by:
a) Coating in which the formulation comprising ethyl 3(N-n-butyl-N-acetylamine) propionate and GLYMO, incorporated or not in the nanoparticles, being mixed in the paint or the varnish.
b) Spray.

The invention is illustrated by the following Examples that do not represent in any way a limitation.

### EXAMPLES

### Example 1 - Preparation of nanoparticles

2 ml of ethyl 3(N-n-butyl-N-acetylamine) propionate are added to 2ml of GLYMO and it is stirred during and is left 2 hours at a temperature between 10 and 60°C. The resultant formulation is added to 200 ml of a solution of silicate and 2g/l of triton. After 60 minutes of stirring, acetic acid is added until the pH lowers down to 4 for the formation of nanoparticles and their precipitation. After drying it is observed that 4 g of silica nanoparticles are obtained.

### Example 2 - Application on textile materials by impregnation via a Pad-Fix process, of antimosquito nanoparticles.

A woven 100% cellulosic fabric of 200 g/m2 of weight was padded in a pad-mangle constituted of an immersion tank and two squeeze rollers, with a mixture made up of 50 g/l nanoparticles of silica containing ethyl 3(N-n-butyl-N-acetylamine) propionate, in one liter of water. The pH was adjusted to 9 and 10 g/l was added with a dispersing agent. It was then subjected to thermofixation in a stenter at a temperature of 130°C for a period of 5 minutes.

### Example 3 - Application on textile materials by exhaustion with antimosquito nanoparticles

One batch of 100 T-shirts of 100% was added to an aqueous dispersion of silica nanoparticles containing ethyl 3(N-n-butyl-N-acetylamine) propionate at an alkaline pH of 9 and a temperature of 40°C, in a rotating drum machine for 30 minutes. It was then centrifuged and then dried above 100°C in a drying tumbler machine, where thermofixation occurs on the textile material (T-shirt).

### Example 4- Application of antimosquito formulation

To a 100% cotton woven fabric, in a pad-mangle a mixture previously prepared made up of 100 g/l of ethyl 3(N-n-butyl-N-acetylamine) propionate and GLYMO (1:1) in water, followed by a thermofixation in a stenter at 130°C, all the process being continuous at a speed of 10 m/min.

### Process for the measurement of IR3535 ethyl 3(N-n-butyl-N-acetylamine) propionate in a textile article

Optical brightener: absorbs in the visible and emits in the uv, conveying a whiter hue to the fibres.
To determine the presence of IR3535 on the textile fibres a colorimetric method conjugating IR3535 with both products, silane and Blankophor R, a product that reflects in the wavelength of 440 nm.

## Claims

1. Formulation with insect repellency activity comprising ethyl 3(N-n-butyl-N-acetylamine) propionate and a hydrolysable silane, wherein the hydrolysable silane consists of 3-glycidylpropylmethoxysilane (GLYMO).

2. Nanoparticles of silica with insect repellency activity, **characterized by** containing the formulation of claim 1, wherein the nanoparticles are suitable to be fixed on materials such as fibres, paints, varnishes, metals, paper, leather, wood.

3. Sol-gel process for preparation of insect repellent silica nanoparticles consisting of the following steps:
a) The addition of ethyl 3(N-n-butyl-N-acetylamine) propionate to a hydrolysable silane thereby obtaining a mixture, the mixture being stirred and left for 2 hours at a temperature between 10 and 60°C, a formulation being thereby obtained,
b) The addition of the formulation resulting from step a) to a solution of sodium silicate and of a tensoactive,
c) Stirring for 60 minutes and after this period acetic acid is added until a neutral pH is obtained for the formation of the sol-gel,
d) The addition of ammonium chloride until the pH lowers until 4 forming the nanoparticles and causing their precipitation,
e) Drying after which the nanoparticles of silica are obtained,
wherein the hydrolysable silane consists of 3-glycidylpropylmethoxysilane (GLYMO).

4. Sol-Gel process for preparing insect repellent silica nanoparticles according to claim 3, wherein the formulation resultant from step a) is immiscible in water or almost totally immiscible in water.

5. Nanoparticles according to claim 2 and being obtained by the sol-gel process of claims 3 or 4.

6. Process of fixation of the formulation of claim 1 or of the nanoparticles of claims 2 or 5 on materials such as textile fibres, paints, varnishes, paper, leather, wood, **characterized by** the nanoparticles being applied on the textile fibre:
a) In an aqueous dispersion by a Pad-fix process at an alkaline pH and at a fixation temperature of 130°C; or
a) by exhaustion in a rotating tumbler machine on already made garments at an alkaline pH at a temperature of 40°C followed by a thermofixation process by drying in a tumbler; or
b) manually by impregnating the fibres in an aqueous dispersion of nanoparticles in which the pH is adjusted to 9 leaving it soaking for a period of 30 minutes, followed by drying in air or in the sun at a temperature above 30°C.

7. Process of fixation of the silica nanoparticles according to claim 6 wherein the fixation of the nanoparticles to the fibres is through an epoxy group.

8. Process of fixation of the nanoparticles according to claim 6 wherein the fixation to paper is carried out by:
a) Spray; or
b) When producing the paper incorporating the nanoparticles with the ethyl 3(N-n-butyl-N-acetylamine) propionate in the paper pulp; or
b) Printing.

9. Process of fixation the silica nanoparticles according to claim 6 **characterized by** the fixation on surfaces such as floor, walls, paints, varnishes, being by:
a) Coating in which the formulation comprising ethyl 3(N-n-butyl-N-acetylamine) propionate and the hydrolysable silane, incorporated or not in the nanoparticles, being mixed in the paint or the varnish, the hydrolysable silane consisting of 3-glycidylpropylmethoxysilane (GLYMO); or
b) Spray.

10. Use of the formulation of claim 1 as insect repellent in a textile, such formulation being directly applied in the textile and thereby providing insect repellency activity in such textile.

## Patentansprüche

1. Formulierung mit insektenabstoßender Aktivität umfasst Ethyl 3 (N-n-butyl-N-acetylamine) Propionat und ein hydrolysierbares Silan, worin das hydrolysierbare Silan aus 3-glycidylpropylmethoxysilane (GLYMO) besteht.

2. Nanopartikel von Kieselsäure mit insektenabstoßender Aktivität, **dadurch gekennzeichnet, dass** sie die Formulierung aus Anspruch 1 beinhalten, worin die Nanopartikel geeignet sind, um auf Materialien wie Fasern, Farben, Lacken, Metallen, Papier, Leder, Holz fixiert zu werden.

3. Sol-Gel-Verfahren für die Vorbereitung von insektenabstoßenden Kieselnanopartikeln, das aus folgenden Schritten besteht:
a) Die Ergänzung von Ethyl 3 (N-n-butyl-N-acetylamine) Propionat zu einem hydrolysierbaren Silan, woraus man eine Mischung erhält, die Mischung wird gerührt und für zwei Stunden bei einer Tempertaur zwischen 10 und 60 °C ruhengelassen, eine Formulierung wird so erhalten,
b) Die Ergänzung der Formulierung, die aus Schritt a) entstanden ist, zu einer Lösung aus Natriumsilikat und einen Tensid,
c) 60 Minuten lang rühren und nach diesem Zeitraum wird Essigsäure hinzugefügt, bis ein neutraler pH für die Bildung des Sol-Gels erhalten wird,
d) Die Ergänzung von Ammoniumchlorid bis der pH auf 4 fällt und so die Nanopartikel bildet und deren Ausfällung verursacht,
e) Trocknung, nach welcher die Nanopartikel aus Kieselsäure erhalten werden,
worin das hydrolysierbare Silan aus 3-glycidylpropylmethoxysilane (GLYMO) besteht.

4. Sol-Gel-Verfahren für die Vorbereitung von insektenabstoßenden Kieselnanopartikeln nach Anspruch 3, worin die Formulierung, welche aus Schritt a) entstanden ist, im Wasser unvermischbar ist oder im Wasser fast völlig unvermischbar ist.

5. Nanopartikel nach Anspruch 2 und welche aus dem Sol-Gel-Verfahren nach Anspruch 3 und 4 erhalten werden.

6. Fixierungsprozess der Formulierung nach Anspruch 1 oder der Nanopartikel nach Anspruch 2 oder 5 an Materialien wie Textilfasern, Farben, Lacken, Papier, Leder, Holz, **dadurch gekennzeichnet, dass** die Nanopartikel auf dem Textilfasern angewendet werden:
a) In einer wässrigen Dispersion durch einen Pad-Fix-Verfahren bei einem alkalischen pH und einer Fixiertempertaur von 130 °C; oder
b) Bei Erschöpfung in einer rotierenden Rüttelmaschine auf bereits hergestellten Kleidungsstücken bei einem alkalischen pH bei einer Tempertaur von 40 °C, gefolgt von einem Thermofixierungsprozess, indem es in einem Tumbler trocknet; oder
c) Manuelle Imprägnierung der Fasern in einer wässrigen Dispersion von Nanopartikeln, in der, der pH auf 9 angepasst ist, indem es für einen Zeitraum von 30 Minuten eingeweicht wird, wonach es an der Luft oder in der Sonne bei einer Temperatur von über 30 °C zum Trocknen gelassen wird.

7. Fixierungsprozess der Kieselnanopartikeln nach Anspruch 6, worin die Fixierung der Nanopartikel an die Fasern durch eine Epoxidgruppe erfolgt.

8. Fixierungsprozess der Nanopartikel nach Anspruch 6, worin die Fixierung auf Papier ausgeführt wird durch:
a) Spray; oder
b) Integriergung der Nanopartikel mit dem Ethyl 3 (N-n-butyl-N-acetylamine) Propionat in der Papiermasse bei der Herstellung des Papiers; oder
c) Bedruckung.

9. Fixierungsprozess der Kieselnanopartikeln nach Anspruch 6, **gekennzeichnet durch** die Fixierung auf Oberflächen, wie Boden, Wänden, Farben, Lacken, erfolgend bei:
a) Beschichtung, in welcher die Formulierung die Ethyl 3 (N-n-butyl-N-acetylamine) Propionat und ein hydrolysierbares Silan, in die Nanopartikel integriert oder nicht, umfasst, in der Farbe oder dem Lack gemischt wird, worin das hydrolysierbare Silan aus 3-glycidylpropylmethoxysilane (GLYMO) besteht; oder
b) Spray.

10. Nutzung der Formulierung aus Anspruch 1 als Insektenschutzmittel in einem Textil, die Formulierung wird direkt auf das Textil angewandt und beschafft so insektenabstoßende Aktivität an diesem Textil.

## Revendications

1. Formulation ayant une activité répulsive contre les insectes comprenant le propionate 3(N-n-butyl-N-acétylamine) d'éthyle et un silane hydrolysable, où le silane hydrolysable consiste en le 3-glycidylpropylméthoxysilane (GLYMO).

2. Nanoparticules de silice ayant une activité répulsive contre les insectes, **caractérisées en ce qu'**elles contiennent la formulation de la revendication 1, où les nanoparticules sont appropriées pour être fixées à des matériaux tels que des fibres, peintures, vernis, métaux, papier, cuir, bois.

3. Processus sol-gel pour la préparation de nanoparticules de silice ayant une activité répulsive contre les insectes comprenant les étapes suivantes :
a) L'addition du propionate 3(N-n-butyl-N-acétylamine) d'éthyle à un silane hydrolysable de manière à obtenir un mélange, en agitant le mélange et le laissant pendant 2 heures à une température entre 10 et 60°C pour obtenir ainsi une formulation,
b) L'addition de la formulation résultant de l'étape a) à une solution de silicate de sodium et d'un tensioactif,
c) L'agitation pendant 60 minutes et après cette période l'addition de l'acide acétique jusqu'à obtenir un pH neutre pour la formation du sol-gel,
d) L'addition du chlorure d'ammonium jusqu'à obtenir la réduction du pH à 4 pour la formation des nanoparticules et leur précipitation,
e) Séchage, après quoi les nanoparticules de silice sont obtenues,
où le silane hydrolysable consiste en le 3-glycidylpropylméthoxysilane (GLYMO).

4. Processus sol-gel pour la préparation de nanoparticules de silice ayant une activité répulsive contre les insectes selon la revendication 3, où la formulation résultant de l'étape a) est totalement miscible dans l'eau ou presque totalement miscible dans l'eau.

5. Nanoparticules selon la revendication 2 obtenues par le processus sol-gel des revendications 3 ou 4.

6. Processus de fixation de la formulation de la revendication 1 ou des nanoparticules des revendications 2 ou 5 à des matériaux tels que des fibres textiles, peintures, vernis, papier, cuir, bois, **caractérisé en ce que** les nanoparticules sont appliquées sur les fibres textiles :
a) Dans une dispersion aqueuse par un procédé de Pad-fix à un pH alcalin et à une température de fixation de 130°C ; ou
a) Par épuisement dans une machine à tambour rotatif sur des vêtements déjà confectionnés à un pH alcalin et à une température de 40°C suivi d'un procédé de thermofixation par séchage dans une machine à tambour ; ou
b) Manuellement par imprégnation des fibres textiles dans une dispersion aqueuse de nanoparticules où le pH est ajusté à 9 et on la laisse tremper pendant une période de 30 minutes, suivi d'un séchage à l'air ou au soleil à une température supérieure à 30°C.

7. Processus de fixation des nanoparticules de silice selon la revendication 6 où la fixation des nanoparticules aux fibres est effectuée au moyen d'un groupe époxy.

8. Processus de fixation des nanoparticules selon la revendication 6 où la fixation au papier est effectuée par :
a) Pulvérisation ; ou
b) Lors de la production du papier, les nanoparticules sont incorporées avec le propionate 3(N-n-butyl-N-acétylamine) d'éthyle dans la pâte à papier ; ou
b) Estampage.

9. Processus de fixation des nanoparticules de silice selon la revendication 6 **caractérisé par** leur fixation sur des surfaces telles que planchers, murs, peintures et vernis, étant effectuée par :
a) Revêtement où la formulation comprenant le propionate 3(N-n-butyl-N-acétylamine) d'éthyle et le silane hydrolysable, incorporée ou non dans les nanoparticules, est mélangée dans la peinture ou le vernis, le silane hydrolysable consistant en le 3-glycidylpropylméthoxysilane (GLYMO) ; ou
b) Pulvérisation.

10. Utilisation de la formulation de la revendication 1 comme insectifuge dans un textile, ladite formulation étant appliquée directement sur le textile de manière à permettre une activité répulsive contre les insectes dans ledit textile.
